## Europäisches Patentamt

## European Patent Office

## Office européen des brevets

(19)

(11) Veröffentlichungsnummer: **0 067 923**
**B1**

# EUROPÄISCHE PATENTSCHRIFT

(12)

(45) Veröffentlichungstag der Patentschrift:
14.05.86

(51) Int. Cl.⁴: **B 60 T· 13/66**

(21) Anmeldenummer: **82100792.9**

(22) Anmeldetag: **04.02.82**

(54) **Wagenzugbremseinrichtung.**

(30) Priorität: **23.06.81 DE 3124480**

(43) Veröffentlichungstag der Anmeldung:
**29.12.82 Patentblatt 82/52**

(45) Bekanntmachung des Hinweises auf die Patenterteilung:
**14.05.86 Patentblatt 86/20**

(84) Benannte Vertragsstaaten:
**DE FR GB IT NL SE**

(56) Entgegenhaltungen:
**DE - B - 2 420 665**
**US - A - 3 768 870**
**US - A - 4 072 362**
**US - A - 4 109 968**

(73) Patentinhaber: **ROBERT BOSCH GMBH, Postfach 50,
D-7000 Stuttgart 1 (DE)**

(72) Erfinder: **Stumpe, Werner, Goerdelerstrasse 10,
D-7014 Kornwestheim (DE)**

ACTORUM AG

## Beschreibung

Die Erfindung geht aus von einer Wagenzugbremsanlage nach der Gattung des Hauptanspruchs.

Eine derartige Wagenzugbremsanlage ist bekannt (US-A-3 768 870). Mit dieser bekannten Bremsanlage wird das Problem der Abstimmung von Zugwagen und Anhängerbremse auf elektrischem Weg gelöst. Eine Kombination einer solchen Bremsanlage mit einer bei Wagenzugbremsanlagen üblichen Druckluft-Zweileitungsbremsanlage und einer Ausfallsicherung sind hier aber nicht angesprochen.

Vorteile der Erfindung

Die Wagenzugbremsanlage mit den kennzeichnenden Merkmalen des Hauptanspruchs hat demgegenüber den Vorteil, dass mit wenigen zusätzlichen Bauteilen ein sehr genaues Einsetzen und Abstimmen einer üblichen Druckluft-Zweileitungsbremsanlage auf dem Zugwagen mit der des Anhängers möglich ist. Ausserdem ist eine Ausfallsicherung gegeben, die bei Ausfall einer Betätigungsart (pneumatisch oder elektrisch) immer noch die andere Betätigungsart zur Verfügung hält. Gemäss einem weiteren Merkmal der Erfindung ist es auch von Vorteil, dass über die ohnehin notwendige Stopplichtleitung ein moduliertes Signal an die Anhängerbremse abgegeben werden kann.

Schliesslich ist es auch von Vorteil, dass ein Modulator auf dem Zugwagen und ein Demodulator auf dem Anhänger in ein elektronisches Steuergerät einer Blockierschutzeinrichtung integrierbar sind. Weitere Vorteile der Erfindung ergeben sich aus der Beschreibung und aus Merkmalen der Unteransprüche.

Zeichnung

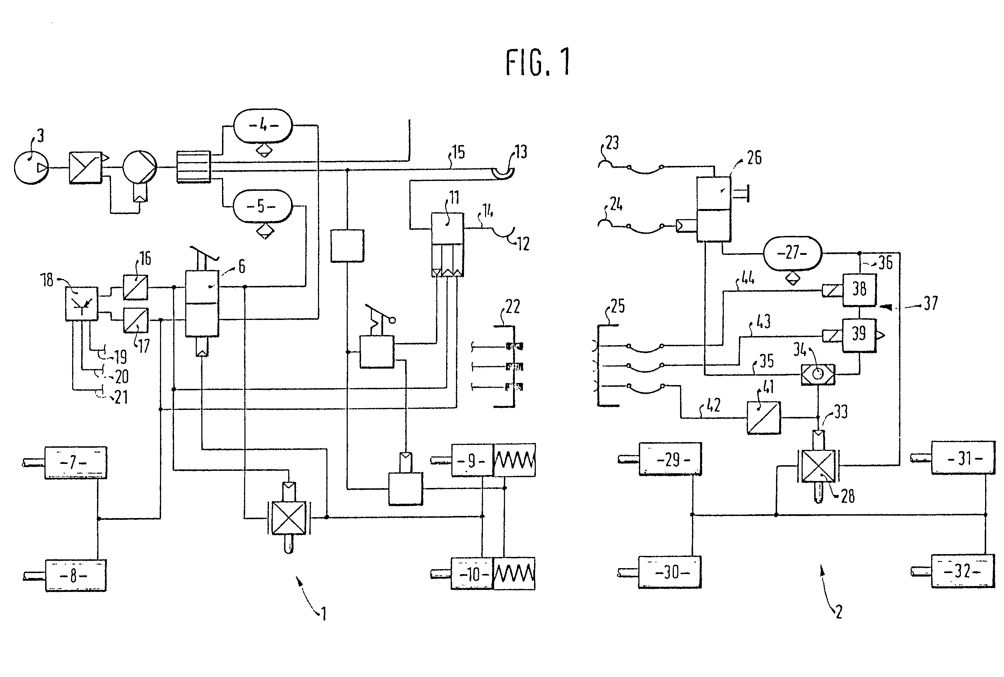

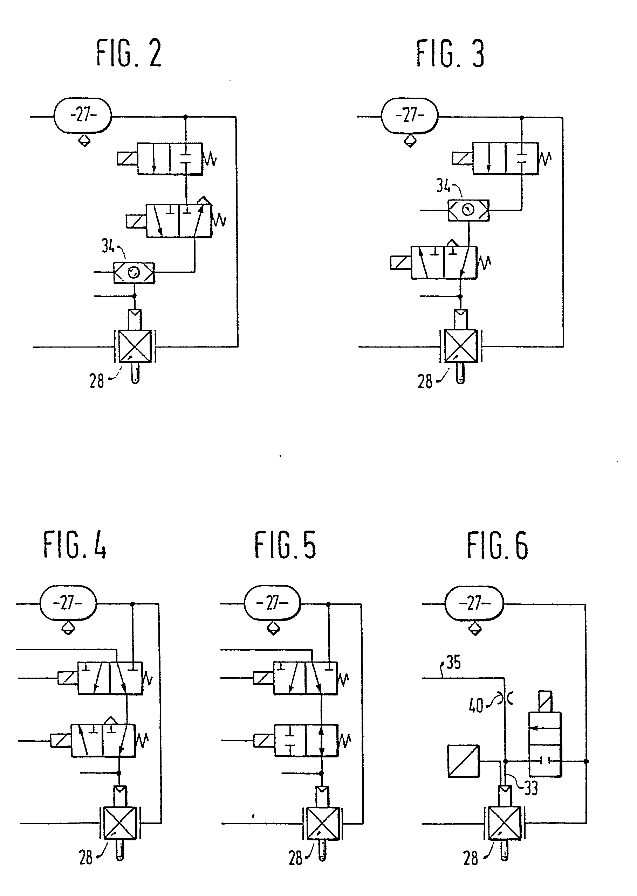

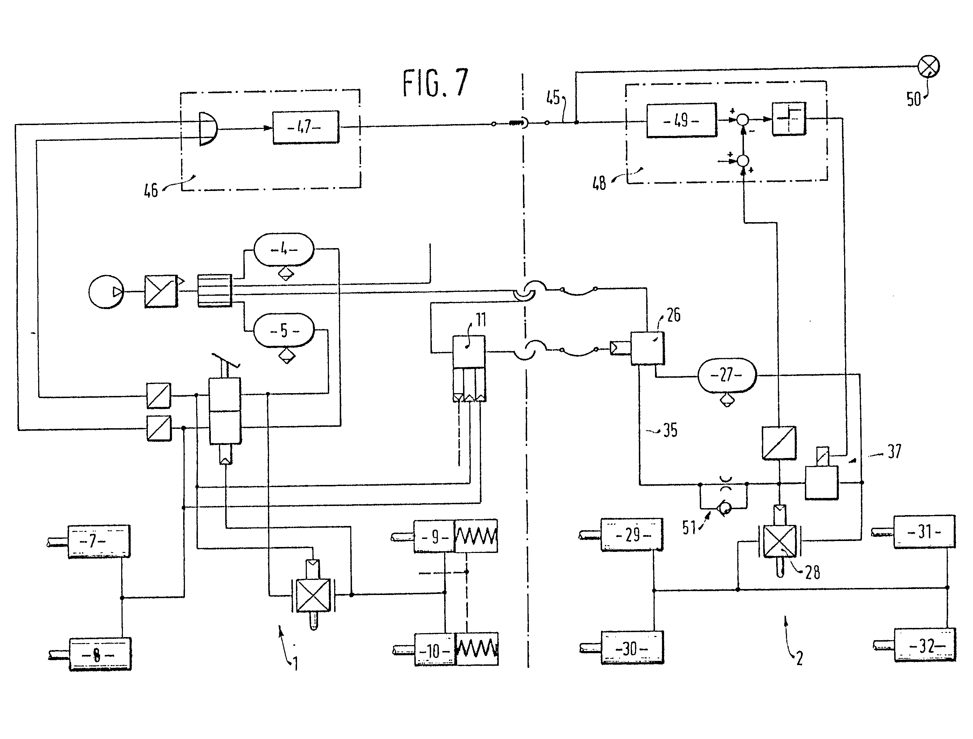

Mehrere Ausführungsbeispiele der Erfindung sind in der Zeichnung dargestellt und in der nachfolgenden Beschreibung näher erläutert. Es zeigen Figur 1 eine Wagenzugbremsanlage, Figur 2 eine Einzelheit nach Figur 1, Figur 3 eine Abwandlung der Ausführung nach Figur 2, Figur 4 bis 6 weitere Abwandlungen der Ausführung nach Figur 2 und Figur 7 eine andere Wagenzugbremsanlage.

Beschreibung der Ausführungsbeispiele

Eine Drucklunft-Wagenzugbremsanlage ist zum Teil auf einem Zugwagen 1 und zum Teil auf einem Anhänger 2 vorgesehen. Wesentliche Teile der Bremsanlage auf dem Zugwagen 1 sind ein Kompressor 3, zwei Vorratsbehälter 4 und 5, ein Zweikreis-Bremsventil 6, vier Bremszylinder 7, 8, 9, 10 und ein Anhänger-Steuerventil 11 sowie zwei Kupplungsköpfe 12 und 13, einer für eine Bremsleitung 14 und einer für eine Vorratsleitung 15.

An der Ausgangsseite des Zweikreis-Bremsventils 6 ist für jeden Bremskreis ein Druckaufnehmer 16 und 17 vorgesehen, die beide an ein elektronisches Steuergerät 18 angeschlossen sind. Von diesem führen drei elektrische Leitungen 19, 20 und 21 zu einem Elektroleitungs-Kupplungskopf 22 am Ende des Zugwagens 1.

Der Anhänger 2 hat einen Vorratsleitungs-Kupplungskopf 23, einen Bremsleitungs-Kupplungskopf 24 und einen Elektroleitungs-Kupplungskopf 25, des weiteren ein Anhänger-Bremsventil 26, einen Vorratsbehälter 27, ein Relaisventil als lastabhängiger Bremskraftregler 28, sowie vier Bremszylinder 29, 30, 31 und 32.

Ein Steueranschluss 33 des Bremskraftreglers 28 ist an ein Zweiwegeventil 34 angeschlossen, das mit seiner einen Seite an eine Leitung 35 vom Anhänger-Bremsventil 26 und mit seiner anderen Seite an eine Steuerleitung 36 angeschlossen ist, die vom Vorratsbehälter 27 herangeführt ist.

In dieser Steuerleitung 36 sitzt eine Magnetventil-Einrichtung 37, die in der Figur 1 aus zwei Magnetventilen 38 und 39 besteht. Die Magnetventil-Einrichtung 37 kann verschieden ausgeführt sein, sie kann, wie die Figur 2 zeigt, aus einem 2/2 und einem unmittelbar dahinter angeordneten 3/2-Wege-Magnetventil bestehen, sie kann das Zweiwegeventil 34 integriert haben (Figur 3), sie kann aus zwei 3/2-Wege-Magnetventilen bestehen (Figur 4), sie kann als 3/2-Wege-Magnetventil mit unmittelbar dahinter liegenden 2/2-Wege-Magnetventil aufgebaut sein (Figur 5) oder sie ist in einfachster Weise nur als 2/2-Wege-Magnetventil ausgebildet (Figur 6), wobei dann aber in der Leitung 35 eine Drossel 40 vorgesehen sein sollte.

An den Steueranschluss 33 des lastabhängigen Bremskraftreglers 28 ist ein Druckaufnehmer 41 angeschlossen, der über eine elektrische Leitung 42 mit dem Kupplungskopf 25 verbunden ist. Ebenso haben das eine oder die beiden Magnetventile 38 und 39 über je eine elektrische Leitung 43 bzw. 44 Verbindung mit dem Kupplungskopf 25.

Wirkungsweise

Beim Bremsen gibt der vom Zweikreis-Bremsventil 6 aus gesteuerte Druck über die beiden Druckaufnehmer 16 und 17 ein Signal in das elektronische Steuergerät 18. Da zur gleichen Zeit der Bremsventildruck noch nicht bis zum Anhänger 2 durchgeschlagen ist, wird vom Anhänger über die Leitung 42 Druck «Null» gemeldet. Das elektronische Steuergerät 18 gibt daraufhin ein elektrisches Signal an die Magnetventil-Einrichtung 37 auf dem Anhänger 2, die Steuerdruck aus dem Anhänger-Vorratsbehälter 27 zum Steueranschluss 33 des Bremskraftreglers 28 geben. Der Bremskraftregler 28 steuert den Bremsdruck an den Anhänger-Bremszylindern 29 bis 32. Auf diese Weise wird der Anhänger 2 bereits elektronisch vorgebremst, bevor der Bremsdruck vom Zugwagen 1 über das Anhänger-Steuerventil 11 am lastabhängigen Bremskraftregler 28 ansteht.

Die Magnetventil-Einrichtung 37 ist ähnlich aufgebaut wie die Magnetventil-Einrichtung einer Blockierschutzeinrichtung, d.h. es ist mit ihr bei entsprechender Auslegung nach den Figuren 2 bis 6 ein Druckabsenken, ein Druckhalten und eine Druckanstiegs-Steuerung möglich. Bei den Bauarten nach den Figuren 3 und 4 ist eine Steuerung während Druckanstieg und Druckabfall möglich.

Die Bauarten nach den Figuren 5 und 6 lassen eine Steuerung nur in der Druckanstiegsphase, d.h. beim Aufbau des Bremsdruckes zu, weil hier eine Entlüftung in die Leitung 35 erfolgt. Dazu kommt, dass bei der Ein-Ventil-Bauart nach Figur 6 durch gewolltes Abströmen von Steueranschluss 33 in die Leitung 35 mit nur einem Magnetventil gearbeitet werden kann. Die Bauart nach der Figur 2 erlaubt ein Entlüften des Steueranschlusses 33 über die Magnetventil-Einrichtung 37 nur dann, wenn der am Zweiwegeventil 34 anstehende Anhängerbremsventildruck noch niedrig ist.

Es ist noch zu bemerken, dass bei der Bauart nach der Figur 1 das elektronische Steuergerät 18 auch auf dem Anhänger 2 angeordnet sein kann.

Die Figur 7 zeigt eine Abwandlung der Ausführung nach der Figur 1; entsprechende Teile tragen deshalb die gleichen Bezugszahlen. Hier ist eine zwischen dem Zugwagen 1 und dem Anhänger 2 ohnehin verlaufende Stopplichtleitung 45 mit Stopplicht 50 auf dem Anhänger 2 dazu verwendet, ein zusätzliches Signal zwischen den beiden Fahrzeugen 1 und 2 zu übertragen.

Zu diesem Zweck sind auf dem Zugwagen 1 ein elektronisches Steuergerät 46 mit einem Modulator 47 und auf dem Anhänger 2 ein elektronisches Steuergerät 48 mit einem Demodulator 49 vorgesehen. Ausserdem ist hier die Drossel 40 der Ausführung nach der Figur 6 durch ein Drossel-Rückschlagventil 51 ersetzt.

In dem elektronischen Steuergerät 46 des Zugwagens wird jeweils das grösste Druckanstiegssignal weitergeleitet. Im Modulator 47 wird dem Stopplichtstrom eine Kennung von der ermittelten Druckhöhe aufgeprägt, was beispielsweise frequenzmoduliert durchgeführt werden kann.

Über die Stopplichtleitung 45 wird das Stopplicht 50 auf dem Anhänger 2 zum Aufleuchten gebracht. Gleichzeitig wird im elektronischen Steuergerät 48 des Anhängers der modulierte Anteil des Stopplichtstromes weiterverarbeitet, d.h. im Demodulator 49 demoduliert. Durch Vergleich mit dem Drucksignal am lastabhängigen Bremskraftregler 28 wird eine ja/nein Ansteuerung der Magnetventil-Einrichtung 37 abgeleitet.

Es ist noch einmal zu bemerken, dass bei Betätigen des Zweikreis-Bremsventils 6 an dessen Ausgang der Bremsdruck kontinuierlich gemessen wird. Auf dem Anhänger 2 wird der Durchgang durch die Magnetventil-Einrichtung 37 geöffnet, wenn der Bremsdruck noch nicht über das Anhänger-Steuerventil 11 durch die Luftleitungsverbindung zum Anhänger 2 gelangt ist. Wird eine Gleichlauf- oder eine vorgegebene Druckdifferenz zwischen Zugwagen und Anhänger erreicht, schaltet die Magnetventil-Einrichtung wieder ab. Die direkte pneumatische Durchsteuerung bleibt von der elektronischen Steuerung im übrigen unberührt.

Mit der erfindungsgemässen Einrichtung kann jede Fahrzeug-Kombination betrieben wrden. Z.B. können Fahrzeuge wechselnder Ausrüstung (mit oder ohne elektronisch gesteuerter Voreilung) gekoppelt werden. Das Bremslicht 50 wird auf jeden Fall betätigt, auch wenn der Anhänger 2 nicht mit der erfindungsgemässen Einrichtung versehen ist.

Ist dagegen das Zugfahrzeug 1 nicht mit der erfindungsgemässen Einrichtung versehen aber der Anhänger 2, so wird durch die fehlende Kennung ein eventuell auf dem Anhänger 2 angeordnetes Magnetventil nicht angesteuert. Bei derart fehlender Kennung kann aber das Magnetventil ersatzweise für kurze Zeit angesteuert, eventuell auch getaktet werden, um so eine Voreilung zu simulieren. Dies ist aber nur für kleine Druckbereiche, z.B. Anlegen der Bremsen möglich, da die Höhe der Druck-Einsteuerung auf dem Zugwagen 1 auf der elektrischen Regelseite unbekannt ist. Ein Ausgleich mit dem Aussteuerdruck vom Zugwagen 1 ist auf jeden Fall gegeben.

**Patentansprüche**

1. Wagenzugbremsanlage mit Druckmittelbremseinrichtungen sowohl auf dem Zugwagen als auch auf dem Anhänger, mit einer elektrischen Steuerung für die Zugwagen- und die Anhängerbremse und mit einem elektrischen Druckaufnehmer (16, 17) zur unterschiedlichen Druckmessung sowie mit einer Magnetventil-Einrichtung (37) in der Bremsanlage des Anhängers, deren Magnetteil abhängig von einem in seiner Grösse veränderlichen Signal des elektrischen Druckaufnehmers (16, 17) auf dem Zugwagen steuerbar ist, dadurch gekennzeichnet, dass eine pneumatische Verbindung (Vorratsleitungskupplungskopf 23 und Bremsleitungskupplungskopf 24) zur Versorgung eines Anhänger-Vorratsbehälters (27) und zum Anschluss der Anhänger-Bremsleitung an einem Anhänger-Bremsventil (26) vorgesehen ist und dass die Anhängerbremse über ein Zweiwegeventil (34) parallel sowohl mit der Magnetventil-Einrichtung (37) als auch mit dem Anhänger-Bremsventil (26) verbunden ist.

2. Wagenzugbremsanlage nach Anspruch 1, dadurch gekennzeichnet, dass sowohl der Bremseinrichtung des Zugwagens (1) als auch der des Anhängers (2) je ein elektronisches Steuergerät (46, 48) zugeordnet ist, die über die elektrische Leitungsverbindung miteinander verbunden sind.

3. Wagenbremsanlage nach Anspruch 1 oder 2, mit einem Relais-Ventil in der Anhängerbremseinrichtung, dadurch gekennzeichnet, dass das Relais-Ventil (28) einen Steueranschluss (33) für zwei Druckmittelleitungen (35 und 36) aufweist, von denen eine mit der Magnetventil-Einrichtung (37) und die andere mit einem Anhänger-Bremsventil (26) verbunden ist.

4. Wagenzugbremsanlage nach Anspruch 3, dadurch gekennzeichnet, dass in die mit dem Anhänger-Bremsventil (26) verbundene Leitung (35) eine Drossel (40) eingesetzt ist.

5. Wagenzugbremsanlage nach Anspruch 3, dadurch gekennzeichnet, dass in die mit dem Anhänger-Bremsventil verbundene Leitung (35) ein Drossel-Rückschlagventil (31) eingesetzt ist.

6. Wagenzugbremsanlage nach einem der Ansprüche 1 bis 5, dadurch gekennzeichnet, dass die Magnetventil-Einrichtung (37) ein 2/2-Wege-Magnetventil ist (Figur 6).

7. Wagenzugbremsanlage nach einem der Ansprüche 1 bis 5, dadurch gekennzeichnet, dass die Magnetventil-Einrichtung (37) eine Kombination von einem 2/2-Wege-Magnetventil und einem 3/2-Wege-Magnetventil ist (Figur 2, 3, 5).

8. Wagenzugbremsanlage nach einem der Ansprüche 1 bis 7, dadurch gekennzeichnet, dass die Magnetventil-Einrichtung eine Kombination von zwei 3/2-Wege-Magnetventilen ist (Figur 4).

9. Wagenzugbremsanlage nach einem der Ansprüche 3 bis 8, dadurch gekennzeichnet, dass die Magnetventil-Einrichtung und das Anhänger-Bremsventil über ein Zweiwegeventil (34) mit dem Relaisventil (28) verbunden sind.

10. Wagenzugbremsanlage nach einem der Ansprüche 3 bis 9, dadurch gekennzeichnet, dass das Relaisventil (28) ein lastabhängiger Bremskraftregler ist.

11. Wagenzugbremsanlage nach einem der Ansprüche 2 bis 10, dadurch gekennzeichnet, dass auch auf dem Anhänger (2) ein elektronisches Steuergerät (48) angeordnet ist.

12. Wagenzugbremsanlage nach Anspruch 11, dadurch gekennzeichnet, dass das auf dem Zugwagen (1) angeordnete elektronische Steuergerät (46) ein Modulator (47) und das auf dem Anhänger (2) vorgesehene Steuergerät (48) ein Demodulator (49) vorgesehen ist und dass die elektrische Leitungsverbindung (45) die Stopplichtleitung ist (Fig. 7).

13. Wagenzugbremsanlage nach Anspruch 12, dadurch gekennzeichnet, dass der Modulator (47) und der Demodulator (49) in ein elektronisches Steuergerät (46, 48) einer Blockierschutzeinrichtung integriert ist.

### Claims

1. Carriage-train braking system comprising pressure-medium braking devices both on the traction engine and on the trailer, provided with an electric control for the traction engine brake and the trailer brake and with an electric pressure pick-up (16, 17) for differential pressure measurement and with a solenoid valve device (37) in the braking system of the trailer, the solenoid part of which can be controlled as a function of a signal, the magnitude of which is variable, of the electric pressure pick-up (16, 17) on the traction engine, characterised in that a pneumatic connection (reservoir line coupling head 23 and brakeline coupling head 24) for supplying a trailer reservoir (27) and for connecting the trailer brakeline to a trailer brake valve (26) is provided and that the trailer brakes are connected via a two-way valve (34) in parallel both to the solenoid valve device (37) and to the trailer brake valve (26).

2. Carriage-train braking system according to Claim 1, characterised in that both the braking device of the traction engine (1) and that of the trailer (2) are each associated with an electronic control device (46, 48) which are connected to each other via the electric line connection.

3. Carriage-train braking system according to Claim 1 or 2, comprising a relay valve in the trailer braking device, characterised in that the relay valve (28) is provided with a control connection (33) for two pressure-medium lines (35 and 36), one of which lines is connected to the solenoid valve device (37) and the other one of which is connected to a trailer braking valve (26).

4. Carriage-train braking system according to Claim 3, characterised in that a throttle (40) is inserted into the line (35) connected to the trailer braking valve (26).

5. Carriage-train braking system according to Claim 3, characterised in that a throttle check valve (31) is inserted into the line (35) connected to the trailer braking valve.

6. Carriage-train braking system according to one of Claims 1 to 5, characterised in that the solenoid valve device (37) is a 2/2-way solenoid valve (Figure 6).

7. Carriage-train braking system according to one of Claims 1 to 5, characterised in that the solenoid valve device (37) is a combination of a 2/2-way solenoid valve and a 3/2-way solenoid valve (Figure 2, 3, 5).

8. Carriage-train braking system according to one of Claims 1 to 7, characterised in that the solenoid valve device is a combination of two 3/2-way solenoid valves (Figure 4).

9. Carriage-train braking system according to one of Claims 3 to 8, characterised in that the solenoid valve device and the trailer braking valve are connected to the relay valve (28) via a two-way valve (34).

10. Carriage-train braking system according to one of Claims 3 to 9, characterised in that the relay valve (28) is a load-dependent brake pressure regulator.

11. Carriage-train braking system according to one of Claims 2 to 10, characterised in that an electronic control unit (48) is also arranged on the trailer (2).

12. Carriage-train brakin system according to Claim 11, characterised in that in the electronic control unit (46) arranged on the traction engine (1) a modulator (47) is provided and in the control unit (48) provided on the trailer (2) a demodulator (49) is provided and that the electric line connection (45) is the stop light line (Figure 7).

13. Carriage-train braking system according to Claim 12, characterised in that the modulator (47) and the demodulator (49) are integrated into an electronic control unit (46, 48) of an anti-blocking device.

### Revendications

1. Installation de freinage pour train routier avec des dispositifs de freinage à fluide sous pression tant sur la voiture tractrice que sur la remorque, avec une commande électrique pour les freins de la voiture tractrice et pour les freins de la remorque et avec un capteur électrique de pression (16, 17) pour la mesure différenciée de pression ainsi qu'avec un dispositif de distributeur électro-

magnétique (37) dans l'installation de freinage de la remorque, dont la partie magnétique est susceptible d'être commandée sur la voiture tractrice en fonction d'un signal d'amplitude modifiable du capteur électrique de pression (16, 17), installation caractérisée en ce qu'il est prévu une liaison pneumatique (tête d'accouplement 23 de la canalisation d'alimentation et tête d'accouplement 24 de la canalisation de frein) pour alimenter un réservoir (27) de la remorque et pour raccorder la canalisation de frein de la remorque à une soupape de frein (26) de la remorque, tandis que les freins de la remorque sont reliés en parallèle par l'intermédiaire d'un distributeur à deux voies (34) aussi bien avec le dispositif de distributeur électro-magnétique (37) qu'avec la soupape de frein (26) de la remorque.

2. Installation de freinage pour train routier selon la revendication 1, caractérisée en ce qu'un appareil électronique de commande (46, 48) est respectivement associé aussi bien au dispositif de freinage de la voiture tractrice (1) qu'à celui de la remorque (2), ces appareils de commande étant reliés ensemble par l'intermédiaire d'un raccordement de canalisations électriques.

3. Installation de freinage pour train routier selon la revendication 1 ou 2, avec une soupape-relais dans le dispositif de freinage de la remorque, installation caractérisée en ce que la soupape-relais (28) comporte un raccordement de commande (33) pour deux canalisations de fluide sous pression (35 et 36), dont l'une est reliée au dispositif de distributeur électromagnétique (37), tandis que l'autre est reliée à une soupape de frein (26) de la remorque.

4. Installation de freinage pour train routier selon la revendication 3, caractérisée en ce qu'un étranglement (40) est inséré sur la canalisation (35) reliée à la soupape de frein (26) de la remorque.

5. Installation de freinage pour train routier selon la revendication 3, caractérisée en ce qu'une soupape de retenue et d'étranglement (31) est insérée sur la canalisation (35) reliée à la soupape de frein de la remorque.

6. Installation de freinage pour train routier selon une des revendications 1 à 5, caractérisée en ce que le dispositif de distributeur électromagnétique (37) est un distributeur magnétique à 2/2 voies, (figure 6).

7. Installation de freinage pour train routier selon une des revendications 1 à 5, caractérisée en ce que le dispositif de distributeur électromagnétique (37) est une combinaison d'un distributeur électromagnétique à 2/2 voies et d'un distributeur électromagnétique à 3/2 voies (figures 2, 3, 5).

8. Installation de freinage pour train routier selon une des revendications 1 à 7, caractérisée en ce que le dispositif de distributeur électromagnétique est une combinaison de 2 distributeurs électromagnétiques à 3/2 voies (figure 4).

9. Installation de freinage pour train routier selon une des revendications 3 à 8, caractérisée en ce que le dispositif de distributeur électromagnétique et la soupape de frein de la remorque sont reliés par l'intermédiaire d'un distributeur à deux voies (34) à la soupape-relais (28).

10. Installation de freinage pour train routier selon une des revendications 3 à 9, caractérisée en ce que la soupape-relais (28) est un régulateur d'effort de freinage en fonction de la charge.

11. Installation de freinage pour train routier selon une des revendications 2 à 10, caractérisée en ce qu'un apparail électronique de commande (48) est également disposé sur la remorque (2).

12. Installation de freinage pour train routier selon la revendication 11, caractérisée en ce qu'il est prévu sur l'appareil électronique de commande (46) disposé sur la voiture tractrice (1) un modulateur (47), tandis qu'il est prévu sur l'appareil de commande (48) disposé sur la remorque (2) un démodulateur (49), tandis que le raccordement de canalisations électriques (45) est la canalisation des feux d'arrêt (figure 7).

13. Installation de freinage pour train routier selon la revendication 12, caractérisée en ce que le modulateur (47) et le démodulateur (49) sont intégrés dans un appareil électronique de commande (46, 48) d'un dispositif de protection contre le blocage.

# FIG. 1

0 067 923

0 067 923

# FIG. 2

# FIG. 3

# FIG. 4

# FIG.5

# FIG.6

9

FIG. 7

0 067 923